# EUROPÄISCHE PATENTSCHRIFT

(11) **EP 0 530 771 B1**
(45) Veröffentlichungstag und Bekanntmachung des Hinweises auf die Patenterteilung: **29.11.1995**
(21) Anmeldenummer: 92114986.0
(22) Anmeldetag: 02.09.1992
(51) Int. Cl.: F01C 1/07

(54) **Drehkolben-Kraftmaschine**
Rotary engine
Moteur rotatif

(30) Priorität: 04.09.1991 DE 4129395
(43) Veröffentlichungstag der Anmeldung: 10.03.1993
(73) Patentinhaber: Geissler, Wilhelm, D-65558 Hirschberg (DE)
(72) Erfinder: Geissler, Wilhelm, D-65558 Hirschberg (DE)
(74) Vertreter: Blumbach, Kramer & Partner

(56) Entgegenhaltungen:
- EP-A- 0 034 958
- FR-A- 2 003 686
- US-A- 1 889 508
- US-A- 3 592 571

## Beschreibung

Die Erfindung betrifft eine Drehkolben-Kraftmaschine mit einem Zylinder mit Ein- und Auslaßkanälen, in dem sich zwei ineinandergreifende Kolbenpaare im gleichen Drehsinn drehen, die derart gesteuert werden, daß abwechselnd einzelne Arbeitskammern mit vorgegebenen Volumen gebildet werden, wobei die auf die Kolbenpaare (2a, 2b; 3a, 3b) über zu den jeweiligen Kolbenpaaren gehörenden Hohlwellen (17) und daran befestigten Hebelarmen (7) auf damit in Wirkverbindung stehenden Pleuelstangen (6) wirken. Eine solche Kraftmaschine ist aus der EP 0 034 958 bekannt.

Bei dieser bekannten, als Motor arbeitenden Maschine wirken die den beiden Kolbenpaaren zugeordneten Hohlwellen mit zugehörigen Hebelarmen und Pleuelstangen jeweils auf getrennte Kurbelwellen ein, so daß der Bauaufwand verhältnismäßig hoch ist. Gleiches gilt für eine als Pumpe ausgebildete Drehkolbenmaschine nach der US-A-1,889,508 sowie als Pumpe oder Motor arbeitende Drehkolbenmaschine nach der FR-A-2 003 686 und der US-A-3,592,571.

Weiterhin ist eine Drehkolben-Kraftmaschine aus der DE-OS 27 19 117 bekannt. Bei der vorbekannten Drehkolben-Kraftmaschine, die als Brennkraftmaschine ausgebildet ist, sind die ineinandergreifenden Kolbenpaare einer Doppelmaschine auf beiden Seiten eines mittleren, mit einer zentralen Welle umlaufenden Rotors angeordnet. Der mittlere Rotor trägt auf beiden Seiten um 90° gegeneinander versetzt, jeweils eines der Kolbenpaare, die demgemäß mit dem mittleren Rotor und der zentralen Welle kontinuierlich umlaufen. Die beiden zugehörigen Kolbenpaare auf beiden Seiten des mittleren Rotors sind über ein Kegelrad-Differentialgetriebe so miteinander und mit dem mittleren Rotor verbunden, daß die Arbeitskammern mit unterschiedlichem Volumen gebildet werden. Eine Begrenzung der Relativbewegung der Kolbenpaare zueinander wird dabei durch besondere Anschläge erreicht.

Der Erfindung liegt die Aufgabe zugrunde, den Aufbau einer Drehkolben-Kraftmaschine zu vereinfachen und mit wenig bewegten Teilen ohne Energieverluste durch Umkehrkräfte einen wesentlich höheren Wirkungsgrad zu erzielen.

Diese Aufgabe wird bei einer gattungsgemäßen Einrichtung durch das im kennzeichnenden Teil des Patentanspruchs 1 angegebene Merkmal gelöst.

Der Vorteil dieser Erfindung besteht insbesondere in dem Doppelwirkungsprinzip in Verbindung mit dem einfachen, unkomplizierten Aufbau der Maschine mit nur einer einzigen Kurbelwelle.

Eine Maschine nach der Erfindung kann als Motor oder als Pumpe betrieben werden. Im Fall eines Motors wird der Maschine ein Druckmittel zugeführt, beispielsweise Druckluft oder eine Hydraulikflüssigkeit, und im Falle einer Pumpe fördert die angetriebene Maschine Druckluft, stellt also einen Kompressor dar, oder Hydraulikflüssigkeit. Insbesondere kann eine Maschine nach der Erfindung auch als Brennkraftmaschine betrieben werden. Dazu wird ein Kraftstoff zugeführt, beispielsweise Benzin, Dieselöl oder verdampftes Flüssiggas, und zwar mit Hilfe bekannter Vorrichtungen, beispielsweise eines Vergasers oder einer Einspritzpumpe. Im Fall eines Betriebs mit Benzin oder Gas wird außerdem eine Zündeinrichtung bekannter Art verwendet.

Die erfindungsgemäße Drehkolben-Kraftmaschine besteht im wesentlichen aus nur sechs beweglichen Teilen, nämlich zwei Kolbenpaaren mit Wellen und Hebeln, zwei Pleuel, einer einzigen Kurbelwelle und einem Kurbelwellengehäuse mit Hauptwelle sowie einem relativ kleinen Kurbelgehäuse mit Zylinder.

Als Ausführungsbeispiel der Erfindung wird nachstehend eine Drehkolben-Brennkraftmaschine anhand der Zeichnungen näher erläutert.

Es zeigt:
- Fig. 1: die Drehkolben-Brennkraftmaschine im Längsschnitt;
- Fig. 2: das Zylindergehäuse mit Drehkolben entlang der Schnittlinie B-B in Fig. 1;
- Fig. 3: das Kurbelwellengehäuse mit Kurbelwelle, Pleuel und den fest mit der Kurbelwelle verbundenen Hebeln entlang der Schnittlinie A-A in Fig. 1.

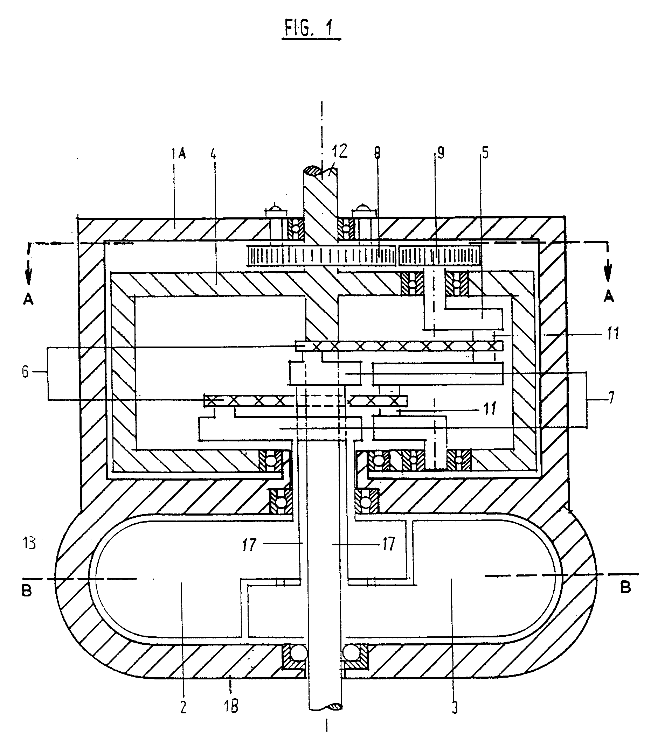

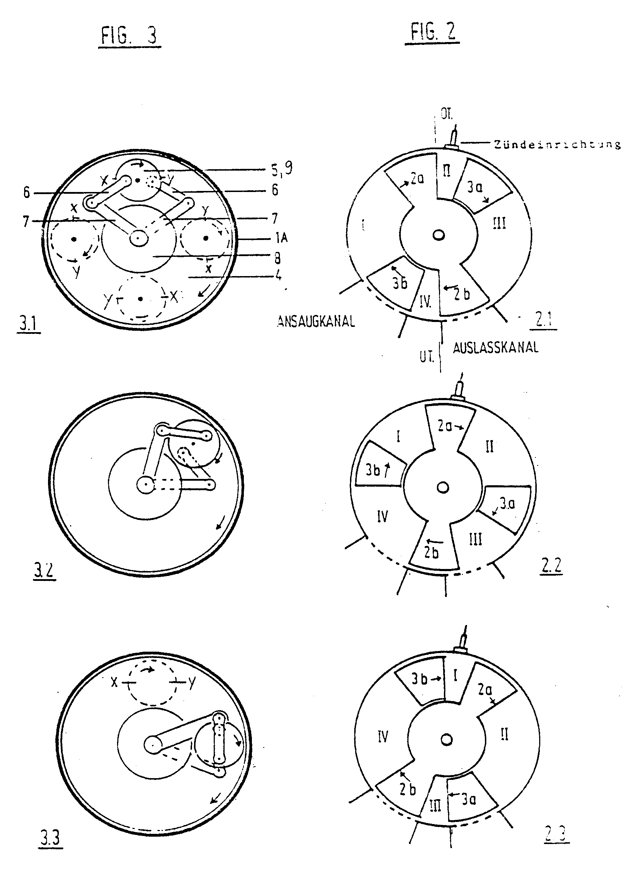

Die in Fig. 1 gezeigte Drehkolben-Brennkraftmaschine besitzt zwei ineinandergreifende mehreckige Drehkolbenpaare 2, 3 (Fig. 2), die im Gehäuseteil 1B angeordnet sind. An der Außenfläche des kolbenaufnehmenden Gehäuseteil 1B ist ein kurbelwellenaufnehmendes Gehäuseteil 1A angebracht. Das Gehäuseteil 1B und das Gehäuseteil 1A bilden somit zusammen ein Motorgehäuse. Im Kolbenraum 13 sind die zwei mehreckigen Kolbenpaare 2, 3 drehbar angeordnet, deren Scheitelteile mit der Innenwandung des Gehäuseteils 1B in Gleitberührung stehen. (Die Spalte zweiten den Kolbenpaaren 2, 3 und zur Innenwand des Gehäuseteils 1B sind zur Verdeutlichung übertrieben dargestellt.) Die Kolbenpaare 2, 3 sind drehfest mit ineinanderliegenden Hohlwellen 17 verbunden. Die aus dem Gehäuseteil 1B in das Gehäuseteil 1A führenden Hohlwellen 17 sind im Gehäuseteil 1A mit drehfest angeordneten Hebelarmen 7 versehen, die über Pleuelstangen 6 mit zugeordneten Hubzapfen 11 einer Kurbelwelle 5 verbunden sind. Die Kurbelwelle 5 ist in einem Kurbelwellengehäuse 4 seitlich (exzentrisch) gelagert, das wiederum mit der Hauptwelle 12 fest verbunden und im Gehäuseteil 1A drehbar gelagert ist. Ein auf der Kurbelwelle 5 drehfest angeordnetes Zahnrad 9 kämmt mit einem am Gehäuseteil 1A befestigten Zahnrad 8.

Die Steuerung der Kolbenpaare 2, 3 erfolgt über das mit der Kurbelwelle 5 fest verbundene Zahnrad 9 mit 20 Zähnen und das am Gehäuseteil 1A fest montierte Zahnrad 8 mit 40 Zähnen. Die Kurbelwelle 5 im Kurbelwellengehäuse 4 bringt bei ihrem Umlauf um die Hauptwelle 12 die Kolbenpaare 2, 3 über die Pleuel 6, die Hubzapfen 11, die Hebelarme 7 und die Hohlwellen 17 in ihre jeweiligen Arbeitsstellungen. Dieser Vorgang erfolgt bei einer Umdrehung der Hauptwelle 12 mit dem Kurbelwellengehäuse 4 um 360° und einer zweimaligen Drehung der Kurbelwelle um 720°. Das bedeutet, daß sich dabei viermal das Viertakt-Verfahren abspielt, nämlich viermal Ansaugen, viermal Verdichten, viermal Arbeiten, viermal Ausstoßen.

Fig. 2 zeigt die Arbeitsweise der Kolbenpaare 2, 3 mit den Kolben 2a, 2b, 3a, 3b.

In der Stellung gemäß Fig. 2.1 hat der Kolben 2a Frischgas angesaugt (Kammer I) und verdichtet (Kammer II). Der Kolben 2b hat gearbeitet (Kammer III) und verbrannte Gase ausgestoßen (Kammer IV).

In der Stellung gemaß Fig. 2.2 hat der Kolben 3a gearbeitet (Kammer II) und stößt verbrannte Gase aus (Kammer III). Der Kolben 3b saugt Frischgas an (Kammer IV) und verdichtet (Kammer I).

In der Stellung gemäß Fig. 2.3 hat der Kolben 2a gearbeitet (Kammer I) und stößt verbrannte Gase aus (Kammer II). Der Kolben 2b saugt Frischgas an (Kammer III) und verdichtet (Kammer IV).

Die Fig. 3.1 bis 3.3 zeigen die jeweilige Stellung der Kurbelwelle 5 bzw. des drehfest auf der Kurbelwelle 5 angeordneten Zahnrades 9 relativ zu den Stellungen der Kolbenpaare 2, 3. Dabei deuten Punkte x, y auf der Kurbelwelle 5 bzw. dem Zahnrad 9 die jeweilige Drehposition an und man erkennt, daß für eine Drehung des Kurbelwellengehäuses 4 um 90°, 180°, 270° und 360° die Kurbelwelle sich jeweils um den doppelten Winkel gedreht hat.

## Patentansprüche

1. Drehkolben-Kraftmaschine mit einem Zylinder mit Ein- und Auslaßkanälen, in dem sich zwei ineinandergreifende Kolbenpaare (2a, 2b; 3a, 3b) im gleichen Drehsinn drehen, die derart gesteuert werden, daß abwechselnd einzelne Arbeitskammern (I bis IV) mit vorgegebenen Volumen gebildet werden, wobei die Kolbenpaare (2a, 2b; 3a, 3b) über zu den jeweiligen Kolbenpaaren gehörenden Hohlwellen (17) und daran befestigten Hebelarmen (7) auf damit in Wirkverbindung stehenden Pleuelstangen (6) wirken,
dadurch gekennzeichnet,
daß die Pleuelstangen (6) zu einer einzigen Kurbelwelle (5) gehören, die ihre Kräfte auf das Kurbelwellengehäuse (4) mit Hauptwelle (12) überträgt bzw. umgekehrt.

2. Drehkolben-Kraftmaschine nach Anspruch 1,
gekennzeichnet durch eine Kraftstoff-Zuführungseinrichtung, derart, daß die Maschine als Brennkraftmaschine arbeitet.

## Claims

1. Rotary engine comprising
a cylinder having inlet and outlet passages,
two intermeshing piston pairs (2a, 2b; 3a, 3b) rotating in the same direction within said cylinder and being controlled so that single working chambers (I to IV) having a predetermined volume are formed alternately, said piston pairs (2a, 2b; 3a, 3b) acting through hollow shafts (17) belonging to the respective piston pairs (2a, 2b; 3a, 3b) and through lever arms (7) fixed thereto, onto connecting rods (6) being in operating connection thereto,
characterized in that
the connecting rods (6) belong to a single crank shaft (5) which transmits its forces onto the crank shaft casing (4) and the main shaft (12), and vice versa.

2. Rotary engine according to claim 1 characterized by a fuel supply means so as the engine operates as an internal combustion engine.

## Revendications

1. Moteur rotatif à un cylindre avec canaux d'admission et d'échappement dans lequel deux paires de pistons (2a, 2b ; 3a, 3b) engagées l'une dans l'autre tournent dans le même sens en étant commandées de sorte à former alternativement des chambres distinctes (I à IV) de volumes prédéfinis, de manière à ce que les paires de pistons (2a, 2b ; 3a, 3b) aient une action sur les bielles (6) par l'intermédiaire de bras de levier (7) attachés aux arbres creux (17) appartenant aux paires de pistons correspondantes,
caractérisé par le fait que
les bielles (6) sont reliées à un seul vilebrequin (5) qui transmet, ou reçoit, le couple au carter de vilebrequin (4) qui porte l'arbre de transmission (12).

2. Moteur rotatif selon la revendication 1,
caractérise par un dispositif d'alimentation en carburant tel que le moteur fonctionne comme un moteur à combustion interne.
